(19) **Europäisches Patentamt**

**European Patent Office**

**Office européen des brevets**

(11) Veröffentlichungsnummer: **0 269 880 B1**

(12) **EUROPÄISCHE PATENTSCHRIFT**

(45) Veröffentlichungstag der Patentschrift: **10.04.91**

(51) Int. Cl.⁵: **A01C 15/04, A01B 73/04**

(21) Anmeldenummer: **87116028.9**

(22) Anmeldetag: **31.10.87**

(54) **Düngerstreuer mit Seitenauslegern und Hebevorrichtung.**

(30) Priorität: **20.11.86 DE 3639590**

(43) Veröffentlichungstag der Anmeldung:
**08.06.88 Patentblatt 88/23**

(45) Bekanntmachung des Hinweises auf die
Patenterteilung:
**10.04.91 Patentblatt 91/15**

(84) Benannte Vertragsstaaten:
**DE FR GB IT NL SE**

(56) Entgegenhaltungen:
**EP-A- 0 176 084      DE-A- 3 512 992**
**DE-B- 3 025 175      GB-A- 2 105 962**
**US-A- 2 770 493      US-A- 4 427 154**

(73) Patentinhaber: **ACCORD Landmaschinen
Heinrich Weiste & Co. GmbH
Coesterweg 42
W-4770 Soest(DE)**

(72) Erfinder: **Weiste, Helmut, Dipl.-Ing.
Siegmund-Schultze-Weg 12
W-4770 Soest(DE)**
Erfinder: **Schumacher, Ferdinand, Jr.
Dipl.-Ing.
Lippstädter Strasse 24
W-4770 Soest(DE)**

(74) Vertreter: **Habbel, Hans-Georg, Dipl.-Ing.
Postfach 3429 Am Kanonengraben 11
W-4400 Münster(DE)**

## Beschreibung

Die Erfindung bezieht sich auf einen Düngerstreuer mit Seintenauslegern und Hebevorrichtung gemäß dem Oberbegriff des Hauptanspruches.

Aus der gattungsbildenden DE-OS 35 12 992 ist ein Düngerstreuer bekannt, dessen beide Seitenausleger durch die drei Arme gebildet werden, wobei jeder Seitenausleger über Spannvorrichtungen in seiner horizontalen Lage gehalten wird. Die bekannte Anordnung ist dabei so ausgebildet, daß der äußerste Arm um eine vertikale Achse geschwenkt werden kann, während der innere und der mittlere Arm um eine horizontale, in Fahrtrichtung weisende Achse klappbar ist, so daß es möglich ist, die Arme an den eigentlichen Behälter heranzuklappen, um damit die Transportbreite so gering wie möglich zu halten, ohne aber dabei eine gewisse Höhe zu überschreiten.

Bei der bekannten Einrichtung werden der oder die äußeren Arme über einen zusätzlichen elektromotorischen Schwenkantrieb an den nächsten inneren Arm herangeschwenkt. Über eine weitere hydraulische Hebevorrichtung, die am Streugutbehälter angelenkt ist, werden dann der innere und der mittlere Arm an den Streugutbehälter herangeschwenkt. Die Einklappbewegung der äußeren Arme erfolgt also nicht automatisch und gleichzeitig mit der Einklappbewegung des inneren Armes.

Diese Art der zwar fernbedienbaren Klappvorrichtung ist aufwendig und - bedingt durch die zusätzlichen Antriebe - störanfällig. Zudem wird durch das Eigengewicht des Antriebes für den äußeren Arm der Massenschwerpunkt des Seitenauslegers ungünstig in den äußeren Bereich verlegt, was eine entsprechend stabile und damit schwere Konstruktion der Seitenausleger notwendig macht.

Aus der DE-GM 84 28 142 ist ein Düngerstreuer bekannt, dessen Seitenausleger jeweils aus drei Armteilen gebildet werden, die über eine Seilzugvorrichtung so aneinander angeschlossen sind, daß sie bei Betätigen einer Hebevorrichtung für den inneren Arm eine korrespondierende Faltbewegung ausführen. Hierbei sind die Arme untereinander über im wesentlichen in Fahrtrichtung verlaufende Achsen aneinander angeschlossen, so daß im zusammengefalteten Zustand ein relativ dickes Armpaket beiderseits des Behälters des Düngerstreuers bedingt wird. Zusätzlich muß das äußerste Armteil um eine weitere Schwenkeinrichtung an den nach innen hin folgenden Arm angeschlossen werden, um so bei Anstoßen an ein Hindernis zu erreichen, daß der äußere Arm ausweichen kann.

Der Erfindung liegt die Aufgabe zugrunde, die gattungsbildende Einrichtung dahingehend zu verbessern, daß mit einer einzigen Hebevorrichtung am inneren Arm der Klappvorgang der einzelnen Arme des Seitenauslegers durchgeführt werden kann und trotzdem im seitlich des Düngemittelbehälters geschaffen wird.

Diese der Erfindung zugrundeliegende Aufgabe wird durch die kennzeichnenden Merkmale des Hauptanspruches gelöst.

Mit anderen Worten ausgedrückt, schlägt die Erfindung ein Gelenk- und Seilsystem vor, das so gestaltet ist, daß, wenn die zwischen Behälter und dem inneren Arm eingeschaltete Hebevorrichtung betätigt wird, zuerst der innere Arm leicht angehoben und gleichzeitig der äußerste Arm um seine vertikale Achse geschwenkt wird. Nach Einleiten dieser Schwenkbewegung und bei gleichzeitigem Anheben des inneren Armes erfolgt ein weiteres Anschwenken oder Anklappen des äußersten Armes, wobei gleichzeitig der mittlere Arm an seinem inneren Ende angehoben und an seinem äußeren Ende nach unten geklappt wird und sich in der Endphase an den inneren Arm anlegt. Hierdurch wird sichergestellt, daß trotz der korrespondierenden Faltbewegungen der einzelnen Arme der äußerste Arm nicht in Kontakt mit dem Boden gelangt, also nicht in den Boden schlägt, sondern bereits so weit angehoben wird, daß eine Einklappbewegung um die vertikale Achse möglich wird, obgleich gleichzeitig das äußere Ende des mittleren Armes abgesenkt wird, das innere Ende des mittleren Armes aber angehoben wird. Durch diese Anordnung wird gleichzeitig erreicht, daß im ausgeklappten Zustand der äußerste Arm des Seitenauslegers in Fahrtrichtung nach hinten schwenken kann, wenn er gegen ein Hindernis oder gegen eine Bodenunebenheit anstößt und dabei selbsttätig in die Ursprungslage zurückschwenkt.

Schließlich hat die erfindungsgemäße Anordnung den Vorteil, daß durch Handbetätigen des äußersten Armes der Einklappvorgang aller Arme durchgeführt werden kann, d. h. also, daß bei Störungen in der hydraulischen Hebevorrichtung die Einklappbewegung der Arme problemlos von einem Mann durchzuführen ist.

Ein Ausführungsbeispiel der Erfindung wird nachfolgend anhand der Zeichnungen erläutert. Die Zeichnungen zeigen in

Fig. 1 eine schematische Ansicht von hinten auf einen mit Seitenauslegern versehenen Düngerstreuer, in

Fig. 2 in größerem Maßstab die Kurvenscheibe, in

Fig. 3 einen Schnitt gemäß der Linie 3 - 3, in Fig. 2, in

Fig. 4 schematisch die Ausleger und ihre Klappbewegung, in

Fig. 5 eine schaubildliche Darstellung der Vorrichtung gemäß Fig. 1 und in

Fig. 6 eine Ausführungsform mit nur zwei Armen unter Einsatz des erfindungsgemäßen Lösungsprinzips.

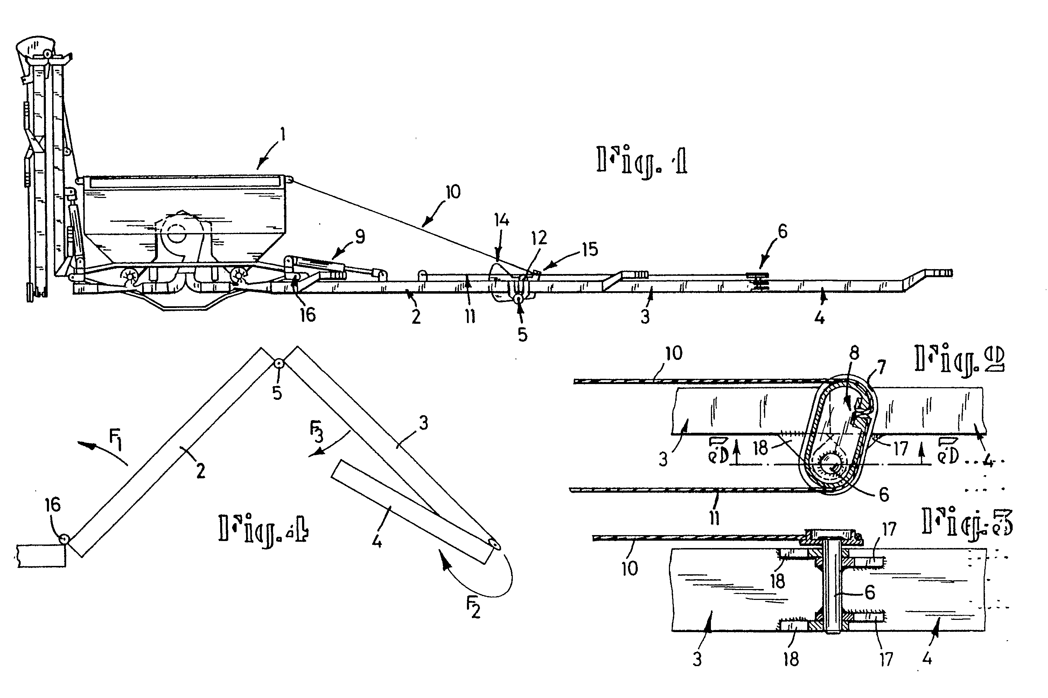

In den Fig. 1 bis 5 ist mit 1 ein Behälter bezeichnet, an den drei Arme 2, 3, 4 anschließen, wobei der Arm 2 der behälternächste oder innere, der Arm 3 der mittlere und der Arm 4 der äußerste Arm ist.

Der innere Arm 2 und der mittlere Arm 3 sind miteinander über eine Schwenkachse 5 verbunden, die horizontal ausgerichtet ist und in Fahrtrichtung weist, während der äußerste Arm 4 mit dem mittleren Arm 3 über eine vertikale Schwenkachse 6 verbunden ist.

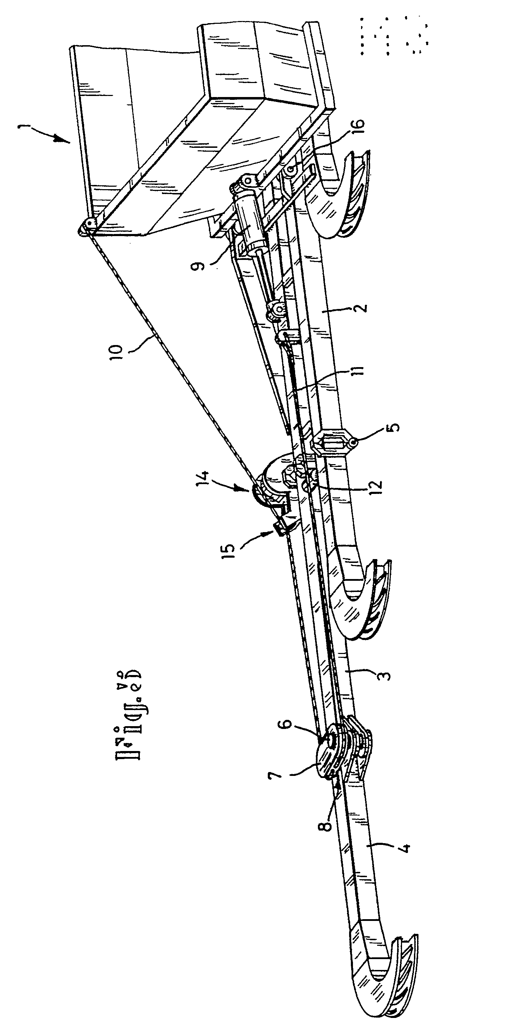

Der äußerste Arm 4 schließt an die vertikale Schwenkachse 6 über eine Kurvenscheibe 7 an, die eine Befestigungsvorrichtung 8 aufweist. Wie Fig. 2 und 3 zeigen, ist dabei diese Schwenkachse 6 gegenüber der Mittelachse des mittleren Armes 3 und des äußersten Armes 4 in Fahrtrichtung gesehen nach hinten versetzt, indem an den beiden Armen 3 und 4 Tragkonsolen 17 und 18 anschließen. Hierbei ist beispielsweise an der Tragkonsole 17 die Schwenkachse 6 festgelegt und kann sich in den entsprechenden Lageröffnungen der Tragkonsole 18 drehen. Die Schwenkachse 6 trägt dann an ihrem oberen Ende ebenfalls fest die Kurvenscheibe 7, so daß sich bei einer Drehbewegung des äußersten Armes 4 um und mit der Schwenkachse 6 die Kurvenscheibe im gleichen Winkelverhältnis wie der äußerste Arm 4 mitgedreht wird.

Zwischen dem inneren Arm 2 und dem Behälter 1 ist eine Hebevorrichtung 9 vorgesehen, die bei dem dargestellten Ausführungsbeispiel als hydraulische Kolbenzylinderanordnung ausgebildet ist und der innere Arm 2 schließt an den Behälter 1 oder an ein entsprechendes Traggestell unter Zwischenschaltung der horizontalen Schwenkachse 16 an, so daß bei einer Betätigung der einerseits am Behälter 1 oder an einem Behältertraggestell befestigten Hebevorrichtung, die anderenends an den inneren Arm 2 angreift, ein Schwenken des inneren Armes 2 um die Schwenkachse 16 möglich ist.

Vom Behälter 1 führt ein Zugseil 10 zu der an der Kurvenscheibe 7 angeordneten Befestigungsvorrichtung 8. Die Kurvenscheibe 7 erstreckt sich dabei von der Schwenkachse 6 - in Fahrtrichtung gesehen - zur vorderen Seite des äußersten Armes 4, so daß damit zwischen dem Zugseil 10 und der Schwenkachse 6 ein gewisses Hebelverhältnis herbeigeführt wird. Hierbei kann entweder die Befestigungsvorrichtung 8 am äußersten vorderen Ende der Kurvenscheibe 7 vorgesehen sein, oder das Zugseil 10 wird - wie in Fig. 2 dargestellt - über eine entsprechende Führung der Kurvenscheibe im vorderen Bereich der Kurvenscheibe 7 geführt.

Vom inneren Arm 2 wird ein Spannseil 11 getragen, das ebenfalls an die Befestigungsvorrichtung 8 der Kurvenscheibe 7 anschließt, und zwar nach Möglichkeit möglichst nahe dem vorderen, in Fahrtrichtung gesehenen Ende der Kurvenscheibe 7. Hierdurch wird das Spannseil 11 um die Schwenkachse 6 herum nach vorne zur Befestigungsvorrichtung 8 hingeführt.

Das Spanseil 11 stützt sich auf dem mittleren Arm 3 auf einem Gegenlager 12 ab, das in den Fig. 1 und 5 deutlich erkennbar ist.

Der mittlere Arm 3 trägt eine Nockenscheibe 14, die auch als Rolle ausgebildet sein kann. Das vom Behälter 1 kommende Zugseil 10 wird über die Oberseite dieser Nockenscheibe 14 geführt, die gegenüber der Oberkante der Arme 2, 3 und 4 nach oben hin vorspringt. Dann wird das Zugseil 10 nach Oberlaufen der Nockenscheibe 14 unter einer Gegenhalterung 15 hindurchgeführt, wodurch erreicht wird, daß, da die Nockenscheibe 14 gegenüber der Armebene nach oben vorspringt, nunmehr das Zugseil 10 nach Umlaufen der Gegenhalterung 15 etwa parallel und in Nähe des äußersten Armes 3 verläuft.

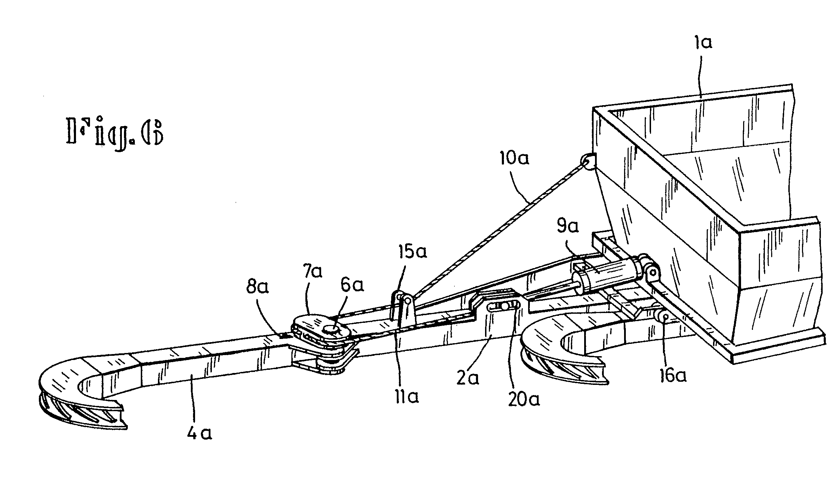

Wird nunmehr die Hebevorrichtung 9 in Tätigkeit gesetzt, wird der innere Arm 2 um seine behälternahe Schwenkachse 16 gekippt, und zwar in Richtung des Pfeiles F1 in Fig. 4. Mit dem Anheben des inneren Armes 2 erfolgt automatisch - in der lotrechten Projektion gesehen - eine Verkürzung des Spannseiles 11, so daß nunmehr ein Schwenken des äußersten Armes 4 um die Schwenkachse 6 bewirkt wird (entsprechend Pfeil F2 in Fig. 4), so daß sich der äußerste Arm 4 - in Fig. 1 und 5 gesehen - zum Betrachter hin verschwenkt. Durch weiteres Anheben des inneren Armes 2 tritt gleichzeitig eine Schwenkbewegung des mittleren Armes 3 um die horizontale Achse 5 ein, und zwar entsprechend dem Pfeil F3 in Fig. 4, wobei sich einerseits der innere Arm 2 nach oben bewegt, andererseits das zum äußersten Arm 4 hin gerichtete Ende des mittleren Armes 3 nach unten geführt wird, aber das zum inneren Arm 2 hin gerichtete Ende des mittleren Armes 3 nach oben bewegt wird. Diese Kinematik verdeutlicht besonders klar die Fig. 4, und es ist erkennbar, daß also ohne eine Bodenberührung ein Nachhintenschwenken des äußersten Armes 4 und ein Aneinanderklappen der beiden Arme 2 und 3 erfolgt.

Es ist weiterhin erkennbar, daß diese sehr unterschiedlichen Bewegungen alle durch eine einzige Hebevorrichtung 9 eingeleitet werden können.

Weiterhin ist erkennbar, daß, wenn die Hebevorrichtung 9 noch nicht betätigt wird, das Einklappen zwangsweise auch dann eingeleitet wird, wenn der äußere Arm 4 durch äußere Einflüsse, z. B. Hindernisse, um seine Schwenkachse 6 in Fahrtrichtung nach hinten geschwenkt wird.

Die in Fig. 6 dargestellte Ausführungsform zeigt einen Ausleger, der nur aus einem inneren Arm 2a und einem äußersten Arm 4a besteht. Diese beiden Arme werden über die Schwenkachse 6a miteinander verbunden. Ein Spannseil 11a greift am inneren Arm 2a an und führt zum Befestigungspunkt 8a einer Kurvenscheibe 7a. In der mittleren Höhe des Behälters 1a greift ein Zugseil 10a an, das nach Unterlaufen der Gegenhalterung 15a zum Befestigungspunkt 8a führt.

Weiterhin schließt an den inneren Arm 2a, der um die Schwenkachse 16a schwenkbar ist, eine Hebevorrichtung 9a an, die als Kolbenzylinderanordnung ausgebildet ist. Das freie Ende des Kolbens führt sich in einem Langloch 20a, wodurch erreicht wird, daß der innere Arm 2a Bewegungen ausführen kann, auch wenn als Hebevorrichtung 9a eine doppelt beaufschlagte hydraulische Kolbenzylinderanordnung eingesetzt wird. Erst wenn der Kolben bei seiner Zugbewegung an die behälterseitige Anlagekante des Langloches 20a zur Anlage kommt, erfolgt das Anheben des inneren Armes 2a. Diese Anordnung schafft also einen Freiweg zwischen der Kolbenstange und dem inneren Arm 2a.

## Ansprüche

1. Düngerstreuer mit Seitenauslegern und Hebevorrichtung wobie die Seitenausleger aus mehreren in Reihe aneinander angelenkten Armen (2,2a,3,4,4a) bestehen und vom Behälter (1, 1a). oder Behältertraggestell unter Zwischenschaltung von Zugelementen (10,10a,11,11a) getragen werden, wobei der äußerste Arm (4, 4a) um eine vertikale Schwenkachse (6, 6a) und der innere Arm (2, 2a) um eine horizontale, in Fahrtrichtung weisende Schwenkachse (16, 16a) schwenkbar sind und zwischen Behälter (1, 1a) oder Behältertraggestell und dem inneren Arm (2, 2a) eine hydraulische Hebevorrichtung (9, 9a) vorgesehen ist, die ein Anheben des inneren Armes (2, 2a) um die horizontale Schwenkachse (16, 16a) ermöglicht, dadurch gekennzeichnet , daß

a) vom Behälter (1, 1a) zum äußersten Arm (4, 4a) ein Zugseil (10, 10a) gespannt ist, das an den äußersten Arm (4, 4a) im Bereich von dessen vertikaler Schwenkachse (6, 6a) aber gegenüber der Schwenkachse (6, 6a) nach vorne in Fahrtrichtung versetzt an einen Befestigungspunkt (8, 8a) einer Kurvenscheibe (7, 7a) fest anschließt, die vom äußersten Arm (4, 4a) um die vertikale Schwenkachse (6, 6a) schwenkbar getragen wird,

b) ein Spannseil (11, 11a) an den Befestigungspunkt (8, 8a) der Kurvenscheibe (7, 7a) anschließt, welches von hier nach hinten um die Schwenkachse (6, 6a) zum inneren Arm (2, 2a) führt,

c) das Zugseil (10, 10a) durch Einsatz einer Gegenhalterung (15, 15a) im äußeren Bereich des an den äußersten Arm (4, 4a) anschließenden mittleren Arm (3) oder inneren Arm (2,2a) so geführt ist, daß es im äußeren Bereich dieses an den äußersten Arm (4, 4a) anschließenden Armes (3, 2a) nahezu parallel zu diesem Arm (3, 2a) verläuft.

2. Vorrichtung nach Anspruch 1, dadurch gekennzeichnet , daß drei Arme (2, 3, 4) Vorgesehen sind und sich das Spannseil (11) am mittleren Arm (3) in Nähe einer zwischen dem mittleren Arm (3) und dem inneren Arm (2) vorgesehenen horizontalen Schwenkachse (5) auf der Oberseite des mittleren Armes (3) abstützt.

3. Vorrichtung nach den Ansprüchen 1 und 2, dadurch gekennzeichnet , daß im Bereich der horizontalen Schwenkachse (5) der mittlere Arm (3) eine nach oben vorspringende Nokkenscheibe (14) oder Rolle zur Abstützung des Zugseiles (10) trägt, an die in Richtung zum freien Ende des mittleren Armes (3) hin gesehen die Gegenhalterung (15) anschließt.

4. Vorrichtung nach den Ansprüchen 1 bis 3, dadurch gekennzeichnet , daß das zwischen Kurvenscheibe (7) und Behälter (1) gespannte Zugseil (10) im oberen Bereich des Behälters (1) anschließt.

5. Vorrichtung nach Anspruch 1, dadurch gekennzeichnet , daß das zwischen der Kurvenscheibe (7a) und Behälter (1a) gespannte Zugseil (10a) im mittleren Höhenbereich des Behälters (1a) anschließt.

6. Vorrichtung nach den Ansprüchen 1 und 5, dadurch gekennzeichnet , daß das Spannseil (11a) mit der hydraulischen Hebevorrichtung (9a) verbunden ist und die hydraulische Hebevorrichtung (9a) unter Zwischenschaltung eines Freiweges an den inneren Arm (2a) anschließt.

## Claims

1. A fertilizer distributor with lateral extensions and a lifting device, the lateral extensions consisting of several arms (2, 2a, 3, 4, 4a) coupled together in series and being carried by the container (1, 1a) or container carrying frame with drawing members (10, 10a, 11, 11a) connected between them, the outermost arm (4, 4a) being swivellable about a vertical swivel axis (6, 6a) and the inner arm (2, 2a) being swivellable about a horizontal swivel axis (16, 16a) pointing in the direction of travel, and a hydraulic lifting device (9, 9a) being provided between the container (1, 1a) or container carrying frame and the inner arm (2, 2a), which lifting device (9, 9a) makes possible lifting of the inner arm (2, 2a) about the horizontal swivel axis (16, 16a), characterized in that

a) a pulling rope (10, 10a) is stretched from the container (1, 1a) to the outermost arm (4, 4a), which pulling rope (10, 10a) is firmly connected to the outermost arm (4, 4a) in the region of the vertical swivel axis (6, 6a) thereof but forwards of the swivel axis (6, 6a) in the direction of travel thereof at a fastening point (8, 8a) of a cam disk (7, 7a), which cam disk (7, 7a) is carried by the outermost arm (4, 4a) to be swivellable about the vertical swivel axis (6, 6a),

b) a tensioning rope (11, 11a) is connected to the fastening point (8, 8a) of the cam disk (7, 7a), and is directed backwards from this point about the swivel axis (6, 6a) towards the inner arm (2, 2a),

c) the pulling rope (10, 10a) is so guided by the use of a holder (15, 15a) in the outer area of the central arm (3) or inner arm (2, 2a) adjacent the outermost arm (4, 4a), that in the outer area of this arm (3, 2a) adjoining the outermost arm (4, 4a) it runs approximately parallel to this arm (3, 2a).

2. A device according to claim 1, characterized in that three arms (2, 3, 4) are provided and the tensioning rope (11) is supported against the central arm (3) on the top thereof in the vicinity of a horizontal swivel axis (5) provided between the central arm (3) and the inner arm (2).

3. A device according to claims 1 and 2, characterized in that in the area of the horizontal swivel axis (5) the central arm (3) carries an upwardly projecting cam plate (14) or roller for supporting the pulling rope (10), which the holder (15) adjoins when viewed in the direction towards the free end of the central arm (3).

4. A device according to claims 1 to 3, characterized in that the pulling rope (10) stretched between the cam disk (7) and container (1) is connected in the upper area of the container (1).

5. A device according to claim 1, characterized in that the pulling rope (10a) stretched between the cam disk (7a) and container (1a) is connected half-way up the container (1a).

6. A device according to claims 1 and 5, characterized in that the tensioning rope (11a) is connected to the hydraulic lifting device (9a) and the hydraulic lifting device (9a) adjoins the inner arm (2a), a lost motion connection being interposed therebetween.

**Revendications**

1. Epandeur d'engrais comprenant des rampes latérales et un dispositif de relevage, dans lequel les rampes latérales sont composées de plusieurs bras (2, 2a , 3, 4, 4a ) articulés les uns aux autres en série, et sont portées par le réservoir (1, 1a ) ou un bâti support de réservoir, avec interposition d'éléments de traction (10, 10a , 11, 11a ), le bras extrême extérieur (4, 4a ) pouvant pivoter autour d'un axe d'articulation vertical (6, 6a ) et le bras intérieur (2, 2a ) autour d'un axe d'articulation horizontal (16, 16a ) qui pointe dans le sens de la marche, et dans lequel il est prévu entre le réservoir (1, 1a ) ou le bâti support de réservoir et le bras intérieur (2, 2a ) un dispositif de relevage hydraulique (9, 9a ) qui permet de relever le bras intérieur (2, 2a ) autour de l'axe d'articulation horizontal (16, 16a ), caractérisé en ce que,

a) il est prévu un câble de traction (10, 10a ) tendu du réservoir (1, 1a ) jusqu'au bras extrême extérieur (4, 4a ), qui est fixé solidairement au bras extrême extérieur (4, 4a ) dans la région de l'axe d'articulation vertical (6, 6a ) mais, dans une position décalée vers l'avant, dans le sens de la marche, par rapport à l'axe d'articulation (6, 6a ), sur un point de fixation (8, 8a ) d'une came (7, 7a ) qui est portée par le bras extrême extérieur (4, 4a ) de façon à pouvoir pivoter autour de l'axe d'articulation vertical (6, 6a ),

b) un câble de tension (11, 11a ) est fixé au point de fixation (8, 8a ) de la came (7, 7a ) et ce câble mène de là vers le bras intérieur (2, 2a ) en passant autour de l'axe d'articulation (6, 6a ) et en se dirigeant vers l'arrière,

c) le câble de traction (10, 10a ) est guidé, grâce à un appui (15, 15a ), dans la région extérieure du bras central (3) ou du bras intérieur (2, 2a ) qui se raccorde au bras extrême extérieur (4, 4a ), de telle manière que, dans la région extérieure de ce bras (3, 2a ) qui se raccorde au bras extrême extérieur (4, 4a ), le câble s'étende à peu près parallèlement à ce bras (3, 2a ).

2. Dispositif selon la revendication 1, caractérisé en ce qu'il y est prévu trois bras (2, 3, 4) et que le câble de tension (11) prend appui sur le bras central (3) à proximité d'un axe d'articulation horizontal (5) interposé entre le bras central (3) et le bras intérieur (2), sur la face supérieure du bras central (3).

3. Dispositif selon l'une des revendications 1 et 2, caractérisé en ce que, dans la région de l'axe d'articulation horizontal (5), le bras central (3) porte une came (14) en saillie vers le haut ou une poulie pour donner appui au câble de traction (10), came ou poulie à laquelle l'appui (15) fait suite en direction de l'extrémité libre du bras central (3).

4. Dispositif selon l'une des revendications 1 à 3, caractérisé en ce que le câble de traction (10) tendu entre la came (7) et le réservoir (1) est fixé dans la région supérieure du réservoir (1).

5. Dispositif selon la revendication 1, caractérisé en ce que le câble de traction (10a ) tendu entre la came (7a ) et le réservoir (1a ) est fixé dans la région de la mi-hauteur du réservoir (1a ).

6. Dispositif selon l'une des revendications 1 et 5, caractérisé en ce que le câble de tension (11a ) est relié au dispositif de relevage hydraulique (9a ) et le dispositif de relevage hydraulique (9a ) est fixé au bras intérieur (2a ) avec interposition d'une course à vide.

Fig. 1

Fig. 2

Fig. 4

Fig. 3

EP 0 269 880 B1

Fig. 6

EP 0 269 880 B1